# EUROPÄISCHE PATENTANMELDUNG

(11) **EP 3 272 427 A1**
(43) Veröffentlichungstag der Anmeldung: **24.01.2018**
(21) Anmeldenummer: 17182466.7
(22) Anmeldetag: 20.07.2017
(51) Int. Cl.: B05D 1/16, B60R 13/02, B32B 5/00, A61G 21/00, B44C 1/10, B44C 5/04

(54) **FAHRZEUG-DEKORPLATTE MIT DREIDIMENSIONALER BEFLOCKTER SICHTFLÄCHE**

(30) Priorität: 21.07.2016 DE 202016103987 U
(71) Anmelder: Schmidt, Udo, 48734 Reken (DE)
(72) Erfinder: Schmidt, Udo, 48734 Reken (DE)
(74) Vertreter: Habbel, Ludwig

(57) **Zusammenfassung**

Bei einer Dekorplatte eines Bestattungsfahrzeugs, mit einem formstabilen, als Träger bezeichneten Flächenelement, welches zwei gegenüberliegende Oberflächen aufweist, wobei eine Oberfläche als dreidimensional geformte Sichtfläche ausgestaltet ist, und mit einer Oberflächenschicht, welche als Beflockung ausgestaltet ist und eine Vielzahl von kurzen Fasern aufweist, schlägt die Erfindung vor, dass die Oberflächenschicht als Flockfolie ausgestaltet ist, mit einer Trägerschicht, auf welcher die Fasern im Winkel zu der Fläche der Trägerschicht verlaufen.

## Beschreibung

Die Erfindung betrifft eine Dekorplatte eines Bestattungsfahrzeugs wie sie im Oberbegriff des Anspruchs 1 beschrieben ist.

Eine gattungsgemäße Dekorplatte ist aus der DE 20 2014 104 512 U1 bekannt.

Im Vergleich dazu, eine textile Stoffbahn in Falten zu legen und auf einem Träger zu drapieren und zu befestigen, beispielsweise einer Holzfaserplatte o. dgl. stellt eine gattungsgemäße Dekorplatte eine sehr wirtschaftlich herzustellende Dekorplatte dar, die beispielsweise in einem hinteren Seitenfenster des Sargraums eines Bestattungsfahrzeugs angeordnet werden kann. Durch die Beflockung wird eine sehr realitätsnahe Ausgestaltung der profilierten Sichtseite der Dekorplatte geschaffen, die einer textilen Bespannung optisch sehr nahe kommt.

Das Aufbringen der Beflockung auf die dreidimensionale Sichtfläche des Trägers ist grundsätzlich mit geringem wirtschaftlichem Aufwand möglich. Aufgrund wechselnder Umgebungseinflüsse - wie Luftfeuchtigkeit oder Temperatur - können jedoch die Ergebnisse der Beflockung, insbesondere deren optisches Erscheinungsbild, beeinflusst werden, so dass dementsprechend unterschiedliche optische Erscheinungen resultieren oder sogar ein angestrebtes Qualitätsniveau der Beflockung nicht erreicht wird, was zu Ausschuss führt, so dass hierdurch der an sich angestrebte wirtschaftliche Vorteil bei der Herstellung der Dekorplatte beeinträchtigt werden kann.

Der Erfindung liegt die Aufgabe zugrunde, eine gattungsgemäße Dekorplatte dahingehend zu verbessern, dass diese möglichst wirtschaftlich hergestellt werden kann.

Diese Aufgabe wird durch eine Dekorplatte mit den Merkmalen des Anspruchs 1 gelöst. Eine vorteilhafte Ausgestaltung der Dekorplatte ist im Unteranspruch beschrieben.

Die Erfindung schlägt mit anderen Worten vor, die Beflockung mittels einer vorgefertigten Flockfolie zu bewirken. Der Auftrag der Flocken auf einen Untergrund wird daher bereits bei der Herstellung der Flockfolie unter industriellen Bedingungen mit gleichbleibenden Ergebnissen bewirkt. Bei der Herstellung eines Bestattungsfahrzeugs und dementsprechend der Herstellung einer gattungsgemäßen Dekorplatte muss lediglich die bereits vorgefertigte Flockfolie auf die dreidimensionale Sichtfläche des Trägers aufgebracht werden, beispielsweise kann die Flockfolie auf die dreidimensionale Sichtfläche des Trägers aufgeklebt werden. Es hat sich herausgestellt, dass Flockfolien handelsüblich sind, die ausreichend dehnbar sind, um der dreidimensionale Profilierung der Sichtfläche zu folgen, so dass die angestrebte Wirkung erreicht werden kann, wie bei einer unmittelbaren Beflockung des Trägers der Dekorplatte. Die Beschichtung der Dekorplatte mit der Flockfolie, beispielsweise die erwähnte Verklebung, ist gegenüber äußeren Einflüssen erheblich unempfindlicher als die Beflockung selbst, so dass mit der vorschlagsgemäßen Ausgestaltung der Dekorplatte optische oder qualitative Schwankungen der Beflockung und ein eventuell daraus resultierender Ausschuss vermieden bzw. erheblich reduziert werden können.

Vorteilhaft kann in an sich bekannter Weise die Sichtfläche der Dekorplatte eine Profilierung aufweisen, die einer herkömmlichen, aus textilen Materialien in Falten gelegten Gardine entspricht, so dass bei der Erzeugung der Sichtfläche eine Profilierung verwendet wird bzw. geschaffen wird, die einen Faltenwurf einer solchen Gardine darstellt.

## Patentansprüche

1. Dekorplatte eines Bestattungsfahrzeugs,
mit einem formstabilen, als Träger bezeichneten Flächenelement, welches zwei gegenüberliegende Oberflächen aufweist,
wobei eine Oberfläche als dreidimensional geformte Sichtfläche ausgestaltet ist,
und mit einer Oberflächenschicht, welche als Beflockung ausgestaltet ist und eine Vielzahl von kurzen Fasern aufweist,
**dadurch gekennzeichnet,**
**dass** die Oberflächenschicht als Flockfolie ausgestaltet ist, mit einer Trägerschicht, auf welcher die Fasern im Winkel zu der Fläche der Trägerschicht verlaufen.

2. Dekorplatte nach Anspruch 1,
**dadurch gekennzeichnet,**
**dass** die Sichtfläche eine Profilierung aufweist, welche einen als Gardine bezeichneten Faltenwurf darstellt.
